# DEMANDE DE BREVET EUROPEEN

(11) **EP 4 663 449 A1**
(43) Date de publication de la demande: **17.12.2025**
(21) Numéro de dépôt: 25176411.4
(22) Date de dépôt: 14.05.2025
(51) Int. Cl.: B60K 6/387, B60W 10/02, B60W 10/06, B60W 10/08, B60W 10/30, B60W 20/15, B60W 20/40, B60W 30/192, B60W 50/14, B60K 6/48

(54) **CONTRÔLE DE LA PRÉPARATION À FONCTIONNER D'UNE MACHINE MOTRICE THERMIQUE D'UN GMP HYBRIDE DE VÉHICULE**

(30) Priorité: 10.06.2024 FR 2406069
(71) Demandeur: Stellantis Auto SAS, 78300 Poissy (FR)
(72) Inventeur: TROJANI, JOSEPH, 89100 SENS (FR); CLAVIER, ALAIN, 95250 BEAUCHAMP (FR); CONVERT, BENJAMIN, 92400 COURBEVOIE (FR)
(74) Mandataire: PSIP

(57) **Abrégé**

Un procédé est implémenté dans un véhicule comprenant une machine motrice thermique couplée à un dispositif de couplage et propre à faire varier des première et seconde pressions internes de circuits d'alimentation en carburant et d'alimentation en huile, et une machine motrice électrique propre à fournir du couple moteur à la machine motrice thermique lorsque le dispositif de couplage est fermé. Ce procédé comprend une étape (10-50) dans laquelle, lorsqu'il n'est pas prévu que la machine motrice thermique fournisse du couple moteur, on ferme le dispositif de couplage, on interdit une injection de carburant dans la machine motrice thermique, et on ordonne à la machine motrice électrique de fournir un couple moteur propre à faire fonctionner la machine motrice thermique selon au moins un régime choisi propre à provoquer des variations des première et seconde pressions internes jusqu'à respectivement des première et seconde valeurs choisies.

## Description

### Domaine technique de l'invention

L'invention concerne les véhicules comprenant un groupe motopropulseur (ou GMP) hybride (thermique et électrique), et plus précisément le contrôle de la préparation à fonctionner de la machine motrice thermique d'un tel GMP alors même qu'il n'est pas prévu que cette dernière fournisse du couple moteur.

### Etat de la technique

Certains véhicules, généralement terrestres (et éventuellement de type automobile), comprennent un groupe motopropulseur (ou GMP) hybride, et donc comprenant au moins une machine motrice thermique et au moins une machine motrice électrique propres à fournir respectivement et possiblement simultanément des couples moteurs pour les déplacer.

L'invention concerne plus précisément les véhicules dans lesquels la machine motrice électrique est couplée à une boîte de vitesses automatisée et la machine motrice thermique peut être couplée à cette boîte de vitesses automatisée lorsqu'un dispositif de couplage auquel elle est couplée est placé dans un état au moins partiellement fermé.

On entend ici par « boîte de vitesses automatisée » une boîte de vitesses comportant au moins un arbre primaire associé à au moins un embrayage, et contrôlable par au moins un calculateur de boîte. Par exemple, il peut s'agir d'une boîte de vitesses à double embrayage (ou DCT (« Dual Clutch Transmission »)).

Dans un véhicule du type de ceux décrits ci-avant, il arrive que seule la machine motrice électrique soit en fonctionnement pour fournir du couple moteur à la boîte de vitesses. Dans une telle situation de vie (roulage purement électrique (ou « zéro émission »)), la machine motrice thermique peut ne pas fonctionner pendant une durée relativement longue, et lorsque son fonctionnement est de nouveau requis (par le calculateur de supervision du GMP, éventuellement pour satisfaire une volonté d'accélération du conducteur), le temps qu'il lui faut pour fournir du couple moteur peut être relativement long, ce qui peut déplaire à certains conducteurs et/ou être potentiellement dangereux. Cela résulte du fait que la machine motrice thermique est couplée à des circuits d'alimentation en carburant et d'alimentation en huile et qu'elle ne peut commencer à produire du couple moteur qu'une fois que ces circuits d'alimentation en carburant et d'alimentation en huile sont en capacité effective de l'alimenter. Or, ces capacités d'alimentation ne sont effectives qu'une fois que les première et seconde pressions internes régnant respectivement dans ces circuits d'alimentation en carburant et d'alimentation en huile sont devenues au moins égales respectivement à des première et seconde valeurs prédéfinies, ce qui ne peut se faire que par l'action de la machine motrice thermique. Il est en effet rappelé que le circuit d'alimentation en carburant comprend une pompe électrique située sur la culasse de la machine motrice thermique et entrainée par l'un des arbres à cames de cette dernière, et le circuit d'alimentation en huile comprend une pompe à huile qui est entrainée par le système de distribution de la machine motrice thermique. On comprendra donc qu'actuellement la mise en pression des circuits d'alimentation en carburant et d'alimentation en huile n'est pas assurée si la machine motrice thermique n'a pas tourné depuis un certain temps.

L'invention a donc notamment pour but d'améliorer la situation.

### Présentation de l'invention

Elle propose notamment à cet effet un procédé de contrôle destiné à être mis en œuvre dans un véhicule comprenant un groupe motopropulseur (ou GMP) comportant :
- une machine motrice thermique couplée à un dispositif de couplage pouvant être au moins partiellement fermé, et propre à faire varier des première et seconde pressions internes respectivement de circuits d'alimentation en carburant et d'alimentation en huile associés, et
- une machine motrice électrique propre à fournir du couple moteur à la machine motrice thermique lorsque le dispositif de couplage est au moins partiellement fermé.

Ce procédé de contrôle se caractérise par le fait qu'il comprend une étape dans laquelle, lorsqu'il n'est pas prévu que la machine motrice thermique fournisse du couple moteur, on ferme au moins partiellement le dispositif de couplage, on interdit une injection de carburant dans la machine motrice thermique, et on ordonne à la machine motrice électrique de fournir un couple moteur propre à faire fonctionner la machine motrice thermique selon au moins un régime choisi propre à provoquer des variations des première et seconde pressions internes jusqu'à respectivement des première et seconde valeurs choisies.

Grâce à l'invention, il est désormais possible d'augmenter les première et seconde pressions internes des pompes des circuit d'alimentation en carburant et circuit d'alimentation en huile, alors même que la machine motrice thermique ne fournit pas de couple moteur pour déplacer le véhicule, ce qui permet de la rendre prête au fonctionnement dans l'hypothèse où cela serait requis.

Le procédé de contrôle selon l'invention peut comporter d'autres caractéristiques qui peuvent être prises séparément ou en combinaison, et notamment :
- dans son étape, les première et seconde valeurs peuvent être choisies de manière à permettre une mise en fonctionnement, dans un intervalle de temps choisi, de la machine motrice thermique pour qu'elle fournisse un couple moteur lorsque ce dernier est requis ;
- en présence de la première option, dans son étape, l'intervalle de temps choisi peut correspondre à une durée nécessaire à une détection d'un nombre de points morts hauts successifs de la machine motrice thermique qui est compris entre deux et trois ;
- dans son étape, une fois les première et seconde valeurs atteintes, on peut ouvrir complètement le dispositif de couplage (placement dans un état non passant dans lequel il ne transfère pas de couple moteur) ;
- en variante, dans son étape, une fois les première et seconde valeurs atteintes, on peut maintenir au moins partiellement fermé le dispositif de couplage jusqu'à une fin de mise en action du groupe motopropulseur ;
- dans son étape, une fois les première et seconde valeurs atteintes, on peut ordonner à la machine motrice électrique de cesser de fournir le couple moteur, et on peut continuer d'interdire l'injection de carburant dans la machine motrice thermique tant que le régime de la machine motrice thermique n'est pas nul ;
- en présence de la dernière option, dans son étape, lorsque le régime de la machine motrice thermique est devenu nul, on peut signaler à un conducteur du véhicule que le groupe motopropulseur est totalement actif, et donc prêt à fournir du couple moteur pour déplacer le véhicule ;
- dans son étape, on peut initialement générer une consigne de couple moteur pour piloter en couple la machine motrice électrique afin qu'elle fournisse le couple moteur qui est propre à faire fonctionner la machine motrice thermique selon le régime choisi ;
- dans son étape, on peut initialement placer le dispositif de couplage dans un état complètement fermé (ou totalement passant), et non pas dans un état partiellement fermé (ou partiellement passant).

L'invention propose également un produit programme d'ordinateur comprenant un jeu d'instructions qui, lorsqu'il est exécuté par des moyens de traitement, est propre à mettre en œuvre un procédé de contrôle du type de celui présenté ci-avant, dans un véhicule comprenant un groupe motopropulseur (ou GMP) comportant, d'une part, une machine motrice thermique couplée à un dispositif de couplage pouvant être au moins partiellement fermé, et propre à faire varier des première et seconde pressions internes respectivement de circuits d'alimentation en carburant et d'alimentation en huile associés, et, d'autre part, une machine motrice électrique propre à fournir du couple moteur à la machine motrice thermique lorsque le dispositif de couplage est au moins partiellement fermé, pour contrôler une préparation de la machine motrice thermique à fonctionner (en cas de besoin).

L'invention propose également un dispositif de contrôle destiné à équiper un véhicule comprenant un groupe motopropulseur (ou GMP) comportant :
- une machine motrice thermique couplée à un dispositif de couplage pouvant être au moins partiellement fermé, et propre à faire varier des première et seconde pressions internes respectivement de circuits d'alimentation en carburant et d'alimentation en huile associés, et
- une machine motrice électrique propre à fournir du couple moteur à la machine motrice thermique lorsque le dispositif de couplage est au moins partiellement fermé.

Ce dispositif de contrôle se caractérise par le fait qu'il comprend au moins un processeur et au moins une mémoire agencés pour effectuer les opérations consistant, lorsqu'il n'est pas prévu que la machine motrice thermique fournisse du couple moteur, à déclencher une fermeture au moins partielle du dispositif de couplage, à déclencher une interdiction d'injection de carburant dans la machine motrice thermique, et à déclencher la fourniture par la machine motrice électrique d'un couple moteur propre à faire fonctionner la machine motrice thermique selon au moins un régime choisi qui est propre à provoquer des variations des première et seconde pressions internes jusqu'à respectivement des première et seconde valeurs choisies.

L'invention propose également un véhicule, éventuellement de type automobile, et comprenant :
- un groupe motopropulseur (ou GMP) comportant, d'une part, une machine motrice thermique couplée à un dispositif de couplage pouvant être au moins partiellement fermé, et propre à faire varier des première et seconde pressions internes respectivement de circuits d'alimentation en carburant et d'alimentation en huile associés, et, d'autre part, une machine motrice électrique propre à fournir du couple moteur à la machine motrice thermique lorsque le dispositif de couplage est au moins partiellement fermé, et
- un dispositif de contrôle du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un dispositif de contrôle selon l'invention, et une chaîne de transmission à boîte de vitesses automatisée et GMP hybride et associé à un calculateur de supervision,
[Fig. 2] illustre schématiquement et fonctionnellement un exemple de réalisation d'un calculateur de supervision comprenant un exemple de réalisation d'un dispositif de contrôle selon l'invention, et
[Fig. 3] illustre schématiquement un exemple d'algorithme mettant en œuvre un procédé de contrôle selon l'invention.

### Description détaillée de l'invention

L'invention a notamment pour but de proposer un procédé de contrôle, et un dispositif de contrôle DC3 associé, destinés à permettre un contrôle de la préparation à fonctionner (en cas de besoin) de la machine motrice thermique MMT d'un groupe motopropulseur (ou GMP) hybride d'un véhicule V, lorsqu'il n'est pas prévu que cette machine motrice thermique MMT fournisse du premier couple moteur cm1.

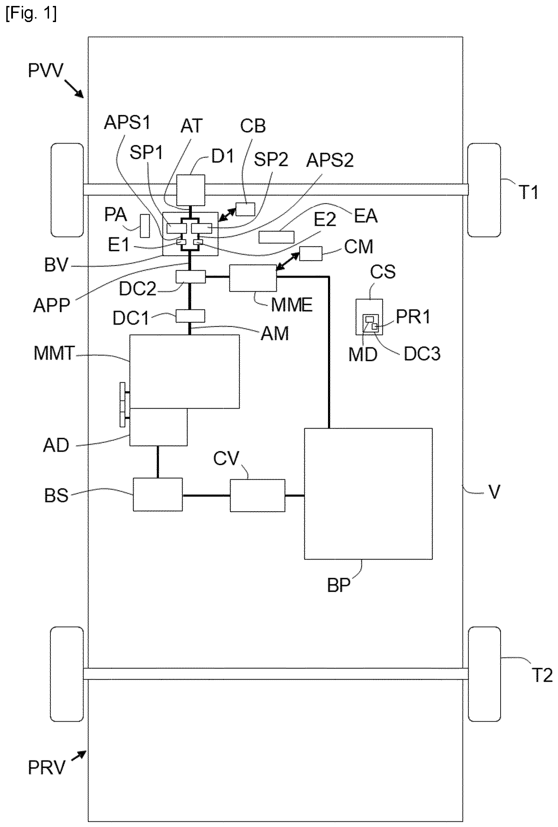

Dans ce qui suit, on considère, à titre d'exemple non limitatif, que le véhicule V est terrestre et de type automobile. Il s'agit par exemple d'une voiture, comme illustré sur la figure 1. Mais l'invention n'est pas limitée à ce type de véhicule. Elle concerne en effet tout type de véhicule (terrestre, maritime (ou fluvial), ou aérien) comprenant une chaîne de transmission à GMP hybride (et donc comprenant au moins une machine motrice thermique MMT et au moins une machine motrice électrique MME).

Par ailleurs, on considère dans ce qui suit, à titre d'exemple non limitatif, que la machine motrice électrique MME du GMP hybride est associée à au moins une batterie BP rechargeable et dite principale (ou de traction ou encore de puissance). Mais elle pourrait être associée à une pile à combustible (par exemple à hydrogène).

De plus, la chaîne de transmission pourrait aussi permettre un mode quatre roues motrices (ou 4x4) ou 4x2.

On a schématiquement représenté sur la figure 1 un véhicule (terrestre) V comprenant une chaîne de transmission à GMP hybride (thermique et électrique) et boîte de vitesses BV automatisée, un calculateur de supervision CS, une batterie de servitude BS, une batterie principale (ou de traction ou encore de puissance) BP rechargeable, un convertisseur CV, et un dispositif de contrôle DC3 selon l'invention.

La batterie de servitude BS est chargée de fournir de l'énergie électrique à un réseau de bord du véhicule V, en complément de celle fournie par le convertisseur CV alimenté par la batterie principale BP via un circuit électrique principal, et parfois à la place de ce convertisseur CV. Par exemple, cette batterie de servitude BS peut être agencée sous la forme d'une batterie de type très basse tension (typiquement 12 V ou 24 V). Elle est rechargeable au moins par le convertisseur CV. On considère dans ce qui suit, à titre d'exemple non limitatif, que la batterie de servitude BS est de type plomb 12 V.

Le réseau de bord est un réseau d'alimentation électrique auquel sont couplés des équipements (ou organes) électriques (ou électroniques) qui consomment de l'énergie électrique.

Le circuit électrique principal (ou « haute tension » ou encore « de puissance ») est connecté, d'une part, à la batterie principale BP via un dispositif d'interface, et, d'autre part, à des équipements électroniques, comme par exemple le convertisseur CV et la machine motrice électrique MME. Il peut aussi éventuellement permettre la recharge de la batterie principale BP par une source d'alimentation externe et temporairement couplée au véhicule V.

Comme illustré sur la figure 1, la chaîne de transmission comprend aussi, ici, un arbre moteur AM, un premier dispositif de couplage DC1, un second dispositif de couplage DC2, et un arbre de transmission AT.

Le fonctionnement de la chaîne de transmission (et donc du GMP) est supervisé par un calculateur de supervision CS.

La machine motrice thermique MMT comprend un vilebrequin (non représenté) qui est solidarisé fixement à l'arbre moteur AM afin d'entraîner ce dernier (AM) en rotation ou bien d'être entraîné en rotation par cette arbre moteur AM. Cette machine motrice thermique MMT est propre à fonctionner selon un premier régime r1 pour fournir, ici pour des roues motrices du véhicule V, un premier couple moteur cm1 qui est défini par une consigne de couple thermique, par exemple déterminée par le calculateur de supervision CS.

Le fonctionnement de la machine motrice thermique MMT est contrôlé par un calculateur de machine thermique CMT, et supervisé par le calculateur de supervision CS. On notera que le calculateur de machine thermique CMT et le calculateur de supervision CS pourraient faire partie d'un même « supercalculateur ».

De plus, la machine motrice thermique MMT est propre à être couplée à un arbre primaire dit principal APP de la boîte de vitesses BV, via au moins le premier dispositif de couplage DC1. Ce dernier (DC1) est propre à délivrer un couple issu du premier couple moteur cm1, notamment (ici) pour au moins un train T1 de roues motrices, lorsqu'il est au moins partiellement fermé (ou passant) et donc lorsqu'il couple la machine motrice thermique MMT à la boîte de vitesses BV (et plus précisément à un embrayage Ej associé à un arbre primaire (secondaire) APSj de cette dernière (BV)).

Ce premier dispositif de couplage DC1 peut être soit totalement fermé (ou totalement passant), soit totalement ouvert (ou totalement non passant), soit partiellement fermé (ou partiellement passant).

Par exemple, le premier dispositif de couplage DC1 peut être un embrayage à circuit hydraulique. Mais il pourrait être d'un autre type.

Egalement par exemple, le train T1 peut être situé dans la partie avant PVV du véhicule V. Il est de préférence, et comme illustré, couplé à l'arbre de transmission AT via un différentiel (ici avant) D1. Mais dans une variante ce train T1 pourrait être celui référencé T2 qui est situé dans la partie arrière PRV du véhicule V.

Bien que cela n'apparaisse pas sur la figure 1, la machine motrice thermique MMT est aussi couplée à un circuit d'alimentation en carburant et un circuit d'alimentation en huile, et propre à faire varier des première pi1 et seconde pi2 pressions internes respectivement de ces circuit d'alimentation en carburant et circuit d'alimentation en huile. A cet effet, le circuit d'alimentation en carburant comprend une pompe électrique située sur la culasse de la machine motrice thermique MMT et entrainée par l'un des arbres à cames de cette dernière (MMT), et le circuit d'alimentation en huile comprend une pompe à huile qui est entrainée par le système de distribution de la machine motrice thermique MMT.

On notera que dans l'exemple illustré non limitativement sur la figure 1 le vilebrequin de la machine motrice thermique MMT est aussi couplé à une courroie, elle-même couplée à un alterno-démarreur AD qui est alimenté en énergie électrique par la batterie de servitude BS (et qui peut aussi recharger cette dernière (BS)). Ainsi, l'alterno-démarreur AD peut fournir du couple à la courroie, laquelle peut fournir ce couple au vilebrequin pour démarrer la machine motrice thermique MMT. La machine motrice thermique MMT peut aussi être démarrée par la machine motrice électrique MME lorsque le premier dispositif de couplage DC1 est au moins partiellement fermé.

Dans une variante, l'alterno-démarreur AD peut être alimenté par la batterie principale BP.

La machine motrice électrique MME est propre, lorsqu'elle est alimentée en énergie électrique par la batterie principale BP, à fonctionner selon un second régime r2 pour fournir un second couple moteur cm2 défini par une consigne de couple électrique, ici pour des roues motrices du véhicule V. Par exemple, la consigne de couple électrique peut être déterminée par le calculateur de supervision CS.

On notera que la somme des premier cm1 et second cm2 couples fournis par le GMP est égale à un couple total ct.

Par ailleurs, cette machine motrice électrique MME est couplée, en aval du premier dispositif de couplage DC1, par le second dispositif de couplage DC2, à l'arbre primaire principal APP de la boîte de vitesses BV pour lui fournir le second couple moteur cm2 qu'elle produit. La machine motrice électrique MME fournit donc ici le second couple moteur cm2 qu'elle produit pour le train T1 et/ou pour la machine motrice thermique MMT.

On notera que la machine motrice électrique MME peut être aussi éventuellement agencée de manière à récupérer dans le véhicule V un couple défini par une consigne, par exemple dans une phase de freinage récupératif (ou régénératif), et dans ce cas ce couple récupéré peut servir à recharger la batterie principale BP associée à la machine motrice électrique MME. Mais la récupération peut aussi se faire sur une partie du premier couple moteur cm1 fourni par la machine motrice thermique MMT.

Le fonctionnement de la machine motrice électrique MME est contrôlé par un calculateur de machine électrique CME, et supervisé par le calculateur de supervision CS.

Le second dispositif de couplage DC2 peut, par exemple, comprendre une cascade de pignons reliant la machine motrice électrique MME à l'entrée de la boîte de vitesses BV (en aval du premier dispositif de couplage DC1).

On comprendra que lorsque le premier dispositif de couplage DC1 est au moins partiellement fermé, que la machine motrice thermique MMT est en fonctionnement (et donc fournit un premier couple moteur cm1), et que la boîte de vitesses BV est accouplée à l'arbre de transmission AT, le premier dispositif de couplage DC1 délivre un couple qui vient s'ajouter à un éventuel second couple moteur cm2 fourni, en amont de la boîte de vitesses BV, par la machine motrice électrique MME lorsqu'elle est alimentée en énergie électrique (ici) par la batterie principale BP. Lorsque le premier dispositif de couplage DC1 est complétement ouvert, seule la machine motrice électrique MME peut fournir un second couple moteur cm2 en amont de la boîte de vitesses BV dans une phase de roulage purement électrique. Lorsque le premier dispositif de couplage DC1 est au moins partiellement fermé, que la machine motrice thermique MMT n'est pas en fonctionnement, et que la boîte de vitesses BV est désaccouplée de l'arbre de transmission AT, la machine motrice électrique MME peut, lorsqu'elle est alimentée en énergie électrique (ici) par la batterie principale BP, fournir un second couple moteur cm2 qui peut entraîner la machine motrice thermique MMT via le premier dispositif de couplage DC1.

Par exemple, la batterie principale (ou de traction ou encore de puissance) BP peut être de type cellulaire. Dans ce cas, elle comprend des cellules de stockage d'énergie électrique, éventuellement électrochimiques (comme par exemple des cellules de type lithium-ion (ou Li-ion) ou Ni-Mh ou Ni-Cd). Egalement par exemple, cette batterie principale BP peut être de type 450 V. Mais cela n'est pas une obligation. En effet, elle pourrait en variante être de type 48 V ou 600 V, par exemple.

Comme indiqué plus haut, la boîte de vitesses BV comprend au moins un arbre primaire (ici dit secondaire) APSj qui est associé à au moins un embrayage Ej propre à être placé dans un état choisi parmi un état ouvert (ou découplé), un état fermé (ou couplé), et un état glissant.

On considère dans ce qui suit, à titre d'exemple non limitatif, que la boîte de vitesses automatisée BV est à double embrayage (ou DCT). Par conséquent, et comme illustré non limitativement sur la figure 1, la boîte de vitesses BV comprend des premier APS1 (j = 1) et second APS2 (j = 2) arbres primaires dits secondaires, des premier E1 (j = 1) et second E2 (j = 2) embrayages, et des première SP1 (j = 1) et seconde SP2 (j = 2) sous-parties dédiées respectivement à des premier et second sous-ensembles de rapports (par exemple 1, 3 et 5, et 2, 4, 6 et éventuellement 7). Ces rapports ont respectivement des démultiplications décroissantes (en partant du plus petit (1)).

Les premier E1 et second E2 embrayages sont connectés à l'arbre primaire principal APP et couplés respectivement aux premier APS1 et second APS2 arbres primaires secondaires afin de leur transférer (lorsqu'ils sont dans l'état fermé ou glissant) le couple moteur qu'ils reçoivent de l'arbre primaire principal APP en provenance du GMP. Ainsi, lorsque le premier embrayage E1 est dans l'état fermé ou glissant il provoque l'entraînement en rotation du premier arbre primaire secondaire APS1 selon un troisième régime r31, et lorsque le second embrayage E2 est dans l'état fermé ou glissant il provoque l'entraînement en rotation du second arbre primaire secondaire APS2 selon un troisième régime r32.

Lorsque la boîte de vitesses BV reçoit en entrée un couple total ct (sur un arbre primaire secondaire APSj associé à l'embrayage Ej en cours d'utilisation (et donc placé dans son état fermé ou son état glissant)), et qu'elle a un rapport engagé (choisi parmi tous ses rapports), elle délivre sur sa sortie (et donc ici à l'arbre de transmission AT) un couple de sortie cs (ici pour les roues motrices du train avant T1).

On notera que dans une variante de réalisation la boîte de vitesses BV pourrait ne comporter qu'un embrayage associé à un unique arbre primaire secondaire.

Le fonctionnement de la boîte de vitesses BV est contrôlé par un calculateur de boîte CB, et supervisé par le calculateur de supervision CS.

Comme évoqué plus haut, l'invention propose notamment un procédé de contrôle destiné à permettre le contrôle de la préparation à fonctionner de la machine motrice thermique MMT, lorsqu'il n'est pas prévu que cette dernière (MMT) fournisse du premier couple moteur cm1. On comprendra que cette situation peut survenir soit lorsque la machine motrice électrique MME est déjà en fonctionnement et fournit un second couple moteur cm2 pour déplacer le véhicule V, soit lorsque la machine motrice électrique MME n'est pas encore en fonctionnement.

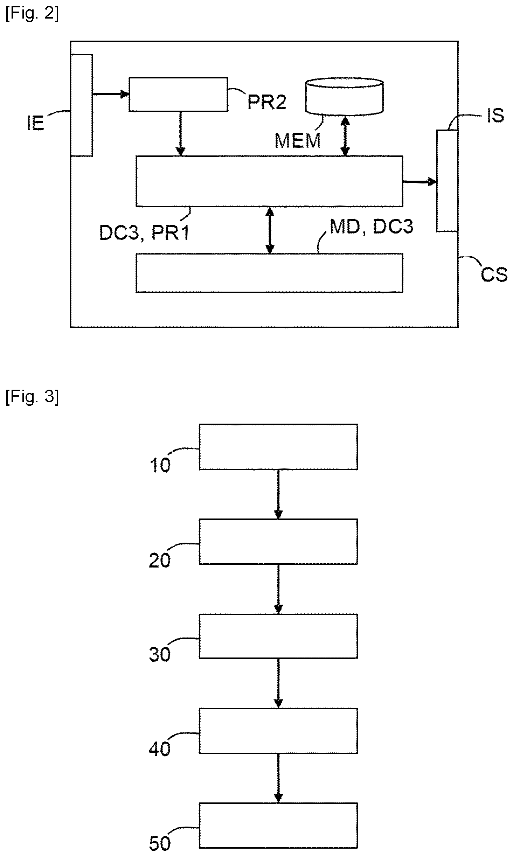

Ce procédé (de contrôle) peut être mis en œuvre au moins partiellement par le dispositif de contrôle DC3 (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de contrôle DC3 peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de contrôle. Le processeur PR1 peut comprendre des circuits intégrés (ou imprimés), ou bien plusieurs circuits intégrés (ou imprimés) reliés par des connexions filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de contrôle DC3 fait partie du calculateur de supervision CS. Mais cela n'est pas obligatoire. En effet, le dispositif de contrôle DC3 pourrait comprendre son propre calculateur dédié, lequel peut alors être couplé au calculateur de supervision CS, ou bien pourrait faire partie d'un autre calculateur embarqué dans le véhicule V et assurant au moins une autre fonction, par exemple.

Comme illustré non limitativement sur la figure 3, le procédé (de contrôle), selon l'invention, comprend une étape 10-50 qui est mise en œuvre chaque fois que deux conditions sont simultanément vérifiées, à savoir le véhicule V est réveillé et il n'est pas prévu que la machine motrice thermique MMT fournisse très prochainement du premier couple moteur cm1.

Dans l'étape 10-50 du procédé, lorsque les deux conditions précitées sont vérifiées :
- on ferme au moins partiellement le dispositif de couplage DC1,
- on interdit l'injection de carburant dans la machine motrice thermique MMT, et
- on ordonne à la machine motrice électrique MME de fournir un second couple moteur cm2 qui est propre à faire fonctionner la machine motrice thermique MMT selon au moins un premier régime r1c choisi, propre à provoquer des variations des première pi1 et seconde pi2 pressions internes jusqu'à respectivement des première v1 et seconde v2 valeurs choisies.

Par exemple, ce sont au moins les processeur PR1 et mémoire MD du dispositif de contrôle DC3 qui peuvent être agencés pour effectuer les opérations consistant, lorsqu'il n'est pas prévu que la machine motrice thermique MMT fournisse du premier couple moteur cm1 :
- à déclencher la fermeture au moins partielle du dispositif de couplage DC1,
- à déclencher l'interdiction d'injection de carburant dans la machine motrice thermique MMT, et
- à déclencher la fourniture par la machine motrice électrique MME d'un second couple moteur cm2 propre à faire fonctionner la machine motrice thermique MMT selon au moins un premier régime r1c choisi, propre à provoquer des variations des première pi1 et seconde pi2 pressions internes jusqu'à respectivement les première v1 et seconde v2 valeurs choisies.

Grâce à ce second couple moteur cm2 qui provoque l'entraînement de la machine motrice thermique MMT au moins selon le premier régime choisi r1c, cette dernière (MMT) peut augmenter les première pi1 et seconde pi2 pressions internes des pompes des circuit d'alimentation en carburant et circuit d'alimentation en huile, permettant ainsi avantageusement de rendre prête au fonctionnement au moins rapidement la machine motrice thermique MMT dans l'hypothèse où le calculateur de supervision CS requerrait (éventuellement pour satisfaire une volonté d'accélération du conducteur) qu'elle fournisse du premier couple cm1 pour déplacer le véhicule V. Il n'y a donc plus de risque que le temps de réponse de la machine motrice thermique MMT déplaise à certains conducteurs et/ou soit potentiellement dangereux.

On notera que dans un véhicule terrestre V le conducteur peut signaler sa volonté d'accélération en enfonçant plus ou moins la pédale d'accélérateur PA (ou analogue), puis le pourcentage d'enfoncement sert à définir une demande de couple (conducteur) à partir de laquelle on, par exemple le calculateur de supervision CS, peut déterminer le couple devant être reçu par l'arbre primaire secondaire APSj pour satisfaire la volonté d'accélération.

On notera également que dans l'étape 10-50 on peut fermer complètement (par exemple le dispositif de contrôle DC3 peut déclencher la fermeture complète du) dispositif de couplage DC1. Mais si cela s'avère suffisant ou nécessaire, on peut fermer partiellement (par exemple le dispositif de contrôle DC3 peut déclencher la fermeture partielle du) dispositif de couplage DC1.

On notera également que dans l'étape 10-50 on peut générer une (par exemple le dispositif de contrôle DC3 peut déclencher la génération d'une) consigne de couple moteur électrique pour piloter en couple la machine motrice électrique MME afin qu'elle fournisse le second couple moteur cm2 qui est propre à faire fonctionner la machine motrice thermique MMT selon le premier régime choisi r1c.

On notera également que les trois actions, mentionnées plus haut et effectuées pour provoquer les variations des première pi1 et seconde pi2 pressions internes jusqu'au moins les première v1 et seconde v2 valeurs choisies, peuvent être réalisées dans une même sous-étape de l'étape 10-50, ou bien dans au moins deux sous-étapes de l'étape 10-50. Ainsi, dans l'exemple d'algorithme illustré non limitativement sur la figure 3, l'étape 10-50 comprend une première sous-étape 10 dans laquelle on ferme au moins partiellement le dispositif de couplage DC1, une deuxième sous-étape 20 dans laquelle on interdit l'injection de carburant dans la machine motrice thermique MMT, et une troisième sous-étape 30 dans laquelle on ordonne à la machine motrice électrique MME de fournir un second couple moteur cm2 propre à faire fonctionner la machine motrice thermique MMT selon au moins le premier régime choisi r1c. On notera que l'ordre de réalisation des deuxième et troisième actions peut être interverti. On pourrait aussi réaliser simultanément les deuxième et troisième actions dans une même sous-étape.

On notera également que la première sous-étape 10 de fermeture au moins partielle du dispositif de couplage DC1 peut être éventuellement réalisée de façon anticipée, par exemple consécutivement à la détection de l'ouverture de la porte du conducteur ou de l'action de la clé de démarrage (éventuellement électronique) ou encore de l'appui sur l'organe de commande du démarrage (« PUSH »). Cette anticipation permet de réduire la durée de mise en action globale du GMP perçue par le conducteur.

On notera également que le début de la réalisation des trois actions peut dépendre de la vérification des valeurs respectives en cours des première pi1 et seconde pi2 pressions internes. En effet, si ces valeurs respectives en cours des première pi1 et seconde pi2 pressions internes sont (très) inférieures respectivement aux première v1 et seconde v2 valeurs choisies, alors il est indispensable de mettre en œuvre l'étape 10-50 pour réaliser les trois actions. En revanche, si les valeurs respectives en cours des première pi1 et seconde pi2 pressions internes sont similaires respectivement aux première v1 et seconde v2 valeurs choisies, on n'a pas besoin de mettre en œuvre l'étape 10-50.

De préférence, dans l'étape 10-50 (et par exemple dans la troisième sous-étape 30) les première v1 et seconde v2 valeurs peuvent être choisies, par exemple par le dispositif de contrôle DC3 et par le biais du choix du premier régime choisi r1c, de manière à permettre la mise en fonctionnement, dans un intervalle de temps choisi, de la machine motrice thermique MMT pour qu'elle fournisse un premier couple moteur cm1 lorsque ce dernier (cm1) est requis. On comprendra en effet que plus le premier régime choisi r1c est important (mais pas trop), plus la vitesse de variation des première pi1 et seconde pi2 pressions internes va être importante, et donc plus l'intervalle de temps choisi de mise en fonctionnement de la machine motrice thermique MMT pourra être petit.

Par exemple, dans l'étape 10-50 (et par exemple dans la troisième sous-étape 30) cet intervalle de temps choisi (par exemple par le dispositif de contrôle DC3 et par le biais du choix du premier régime choisi r1c) peut correspondre à la durée nécessaire à la détection d'un nombre de points morts hauts successifs de la machine motrice thermique MMT qui est compris entre deux et trois. A titre d'exemple illustratif, ce nombre de points morts hauts successifs peut être égal à deux.

Egalement par exemple, dans l'étape 10-50 (et par exemple dans la troisième sous-étape 30), une fois les première v1 et seconde v2 valeurs atteintes, on peut ouvrir complètement le (par exemple le dispositif de contrôle DC3 peut déclencher une ouverture complète du) dispositif de couplage DC1. En variante, on peut maintenir au moins partiellement fermé le (par exemple le dispositif de contrôle DC3 peut déclencher un maintien au moins partiellement fermé du) dispositif de couplage DC1 jusqu'à la fin de mise en action du GMP.

On notera également que l'étape 10-50 peut comprendre, comme illustré non limitativement sur la figure 3, une sous-étape 40 dans laquelle, une fois les première v1 et seconde v2 valeurs atteintes, on peut ordonner à la machine motrice électrique MME de cesser de fournir le second couple moteur cm2 (par exemple le dispositif de contrôle DC3 peut déclencher un arrêt de la fourniture du second couple moteur cm2 par la machine motrice électrique MME), et on (par exemple le dispositif de contrôle DC3) peut continuer d'interdire la poursuite de l'injection de carburant dans la machine motrice thermique MMT tant que le premier régime r1 de la machine motrice thermique MMT n'est pas nul. On comprendra que l'objectif de cette dernière option est de s'assurer que la machine motrice thermique MMT ne vas pas démarrer avant la fin de sa phase de préparation au fonctionnement.

On comprendra également que tant que les première v1 et seconde v2 valeurs n'ont pas été atteintes, on maintient l'ordre de fermeture au moins partielle du dispositif de couplage DC1, l'ordre d'interdiction d'injection de carburant dans la machine motrice thermique MMT, et l'ordre de fourniture d'un second couple moteur cm2 propre à faire fonctionner la machine motrice thermique MMT.

Egalement par exemple, l'étape 10-50 peut comprendre, comme illustré non limitativement sur la figure 3, une sous-étape 50 dans laquelle, lorsque le premier régime r1 de la machine motrice thermique MMT est devenu nul (r1 = 0), on peut signaler (par exemple le dispositif de contrôle DC3 peut déclencher un signalement) au conducteur que le GMP est totalement actif, et donc prêt à fournir du premier cm1 et/ou second cm2 couple(s) moteur(s) pour déplacer le véhicule V.

Le signalement destiné au conducteur peut être fait par allumage d'un voyant (éventuellement dédié à la préparation au fonctionnement du GMP) du véhicule V (par exemple du tableau de bord) et/ou par génération d'au moins un message. Dans le cas d'un message, il peut s'agir d'un message textuel affiché sur au moins un écran EA du véhicule V (par exemple du tableau de bord ou d'un combiné central) ou sur l'écran d'un téléphone intelligent (ou « smartphone ») du conducteur et/ou d'un message sonore diffusé par au moins un haut-parleur du véhicule V ou de ce téléphone intelligent.

On notera également que si pendant l'étape 10-50 le calculateur de supervision CS requiert que la machine motrice thermique MMT se mette à fournir un premier couple moteur cm1 choisi pour déplacer le véhicule V, alors on (par exemple le dispositif de contrôle DC3) met immédiatement fin à l'étape 10-50.

On notera également, comme illustré non limitativement sur la figure 2, que le calculateur de supervision CS (ou le calculateur du dispositif de contrôle DC3) peut aussi comprendre une mémoire de masse MEM, notamment pour stocker les valeurs en cours des première pi1 et seconde pi2 pressions internes ainsi que d'éventuelles données intermédiaires intervenant dans tous ses calculs et traitements. Par ailleurs, ce calculateur de supervision CS (ou le calculateur du dispositif de contrôle DC3) peut aussi comprendre une interface d'entrée IE pour recevoir les valeurs en cours des première pi1 et seconde pi2 pressions internes pour les utiliser dans des calculs ou traitements, éventuellement après les avoir mises en forme et/ou démodulées et/ou amplifiées, de façon connue en soi, au moyen d'un processeur de signal numérique PR2. De plus, ce calculateur de supervision CS (ou le calculateur du dispositif de contrôle DC3) peut aussi comprendre une interface de sortie IS, notamment pour délivrer chaque message ou ordre de fermeture au moins partielle du dispositif de couplage DC1, chaque message ou ordre d'interdiction d'injection de carburant dans la machine motrice thermique MMT, chaque message ou ordre de fourniture d'un second couple moteur cm2 propre à faire fonctionner la machine motrice thermique MMT, chaque message ou ordre d'ouverture du dispositif de couplage DC1, chaque message ou ordre de fin d'interdiction d'injection de carburant dans la machine motrice thermique MMT, chaque message ou ordre de fin de fourniture du second couple moteur cm2 pour faire fonctionner la machine motrice thermique MMT, et chaque message ou ordre de signalement de la fin de la préparation au fonctionnement du GMP.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de contrôle décrit ci-avant pour contrôler dans le véhicule V la préparation de la machine motrice thermique MMT à fonctionner.

## Revendications

1. Procédé de contrôle pour un véhicule (V) comprenant un groupe motopropulseur comportant i) une machine motrice thermique (MMT) couplée à un dispositif de couplage (DC1) pouvant être au moins partiellement fermé, et propre à faire varier des première et seconde pressions internes respectivement de circuits d'alimentation en carburant et d'alimentation en huile associés, et ii) une machine motrice électrique (MME) propre à fournir du couple moteur à ladite machine motrice thermique (MMT) lorsque ledit dispositif de couplage (DC1) est au moins partiellement fermé, **caractérisé en ce qu'**il comprend une étape (10-50) dans laquelle, lorsqu'il n'est pas prévu que ladite machine motrice thermique (MMT) fournisse du couple moteur, on ferme au moins partiellement ledit dispositif de couplage (DC1), on interdit une injection de carburant dans ladite machine motrice thermique (MMT), et on ordonne à ladite machine motrice électrique (MME) de fournir un couple moteur propre à faire fonctionner ladite machine motrice thermique (MMT) selon au moins un régime choisi propre à provoquer des variations desdites première et seconde pressions internes jusqu'à respectivement des première et seconde valeurs choisies.

2. Procédé selon la revendication 1, **caractérisé en ce que** dans ladite étape (10-50) lesdites première et seconde valeurs sont choisies de manière à permettre une mise en fonctionnement, dans un intervalle de temps choisi, de ladite machine motrice thermique (MMT) pour qu'elle fournisse un couple moteur lorsque ce dernier est requis.

3. Procédé selon la revendication 2, **caractérisé en ce que** dans ladite étape (10-50) ledit intervalle de temps choisi correspond à une durée nécessaire à une détection d'un nombre de points morts hauts successifs de ladite machine motrice thermique (MMT) compris entre deux et trois.

4. Procédé selon l'une des revendications 1 à 3, **caractérisé en ce que** dans ladite étape (10-50), une fois lesdites première et seconde valeurs atteintes, on ouvre complètement ledit dispositif de couplage (DC1).

5. Procédé selon l'une des revendications 1 à 3, **caractérisé en ce que** dans ladite étape (10-50), une fois lesdites première et seconde valeurs atteintes, on maintient au moins partiellement fermé ledit dispositif de couplage (DC1) jusqu'à une fin de mise en action dudit groupe motopropulseur.

6. Procédé selon l'une des revendications 1 à 5, **caractérisé en ce que** dans ladite étape (10-50), une fois lesdites première et seconde valeurs atteintes, on ordonne à ladite machine motrice électrique (MME) de cesser de fournir ledit couple moteur, et on continue d'interdire ladite injection de carburant dans la machine motrice thermique (MMT) tant que ledit régime de la machine motrice thermique (MMT) n'est pas nul.

7. Procédé selon la revendication 6, **caractérisé en ce que** dans ladite étape (10-50), lorsque ledit régime de la machine motrice thermique (MMT) est devenu nul, on signale à un conducteur dudit véhicule (V) que ledit groupe motopropulseur est totalement actif, et donc prêt à fournir du couple moteur pour déplacer ledit véhicule (V).

8. Produit programme d'ordinateur comprenant un jeu d'instructions qui, lorsqu'il est exécuté par des moyens de traitement, est propre à mettre en œuvre le procédé de contrôle selon l'une des revendications 1 à 7, dans un véhicule (V) comprenant un groupe motopropulseur comportant i) une machine motrice thermique (MMT) couplée à un dispositif de couplage (DC1) pouvant être au moins partiellement fermé, et propre à faire varier des première et seconde pressions internes respectivement de circuits d'alimentation en carburant et d'alimentation en huile associés, et ii) une machine motrice électrique (MME) propre à fournir du couple moteur à ladite machine motrice thermique (MMT) lorsque ledit dispositif de couplage (DC1) est au moins partiellement fermé, pour contrôler une préparation de ladite machine motrice thermique (MMT) à fonctionner.

9. Dispositif de contrôle (DC3) pour un véhicule (V) comprenant un groupe motopropulseur comportant i) une machine motrice thermique (MMT) couplée à un dispositif de couplage (DC1) pouvant être au moins partiellement fermé, et propre à faire varier des première et seconde pressions internes respectivement de circuits d'alimentation en carburant et d'alimentation en huile associés, et ii) une machine motrice électrique (MME) propre à fournir du couple moteur à ladite machine motrice thermique (MMT) lorsque ledit dispositif de couplage (DC1) est au moins partiellement fermé, **caractérisé en ce qu'**il comprend au moins un processeur (PR1) et au moins une mémoire (MD) agencés pour effectuer les opérations consistant, lorsqu'il n'est pas prévu que ladite machine motrice thermique (MMT) fournisse du couple moteur, à déclencher une fermeture au moins partielle dudit dispositif de couplage (DC1), à déclencher une interdiction d'injection de carburant dans la machine motrice thermique (MMT), et à déclencher la fourniture par ladite machine motrice électrique (MME) d'un couple moteur propre à faire fonctionner ladite machine motrice thermique (MMT) selon au moins un régime choisi qui est propre à provoquer des variations des première et seconde pressions internes jusqu'à respectivement des première et seconde valeurs choisies.

10. Véhicule (V) comprenant un groupe motopropulseur comportant i) une machine motrice thermique (MMT) couplée à un dispositif de couplage (DC1) pouvant être au moins partiellement fermé, et propre à faire varier des première et seconde pressions internes respectivement de circuits d'alimentation en carburant et d'alimentation en huile associés, et ii) une machine motrice électrique (MME) propre à fournir du couple moteur à ladite machine motrice thermique (MMT) lorsque ledit dispositif de couplage (DC1) est au moins partiellement fermé, **caractérisé en ce qu'**il comprend en outre un dispositif de contrôle (DC3) selon la revendication 9.
